(19) Europäisches Patentamt
European Patent Office
Office européen des brevets

(11) EP 0 569 573 B1

(12) EUROPÄISCHE PATENTSCHRIFT

(45) Veröffentlichungstag und Bekanntmachung des Hinweises auf die Patenterteilung:
**10.04.1996 Patentblatt 1996/15**

(21) Anmeldenummer: **92923790.7**

(22) Anmeldetag: **25.11.1992**

(51) Int Cl.6: **G01L 9/12**

(86) Internationale Anmeldenummer:
**PCT/EP92/02713**

(87) Internationale Veröffentlichungsnummer:
**WO 93/11415 (10.06.1993 Gazette 1993/14)**

(54) **KAPAZITIVE DRUCKMESSANORDNUNG MIT HOHER LINEARITÄT**

CAPACITIVE MANOMETER WITH A HIGHLY LINEAR RESPONSE

DISPOSITIF MANOMETRIQUE A HAUTE LINEARITE

(84) Benannte Vertragsstaaten:
**BE CH DE DK ES FR GB IT LI NL SE**

(30) Priorität: **28.11.1991 DE 4139162**
**19.12.1991 DE 4142101**

(43) Veröffentlichungstag der Anmeldung:
**18.11.1993 Patentblatt 1993/46**

(73) Patentinhaber: **ENDRESS + HAUSER GMBH + CO.**
**D-79689 Maulburg (DE)**

(72) Erfinder: **BENZEL, Hubert**
**D-7401 Pliezhausen (DE)**

(74) Vertreter: **Morstadt, Volker, Dipl.-Ing.**
**c/o Endress + Hauser Flowtec AG**
**Kägenstrasse 7**
**Postfach 435**
**CH-4153 Reinach (BL) 1 (CH)**

(56) Entgegenhaltungen:
**EP-A- 0 061 359**
**DE-A- 4 107 345**
**US-A- 4 227 419**
**US-A- 4 542 436**
**US-A- 4 743 836**

Bemerkungen:
Die Akte enthält technische Angaben, die nach dem Eingang der Anmeldung eingereicht wurden und die nicht in dieser Patentschrift enthalten sind.

EP 0 569 573 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine kapazitive Druckmeßanordnung.

Eine bekannte Druckmeßanordnung (vgl. die WO-A 91/09278) ist in den Fig. 17 bis 19 gezeigt. Eine Drucksensorstruktur, die in ihrer Gesamtheit mit dem Bezugszeichen 1 bezeichnet ist und die in Fig. 17 in ihrer Draufsicht und in Fig. 19 in einer schematischen Schnittdarstellung gezeigt ist, umfaßt einen Sensorkörper 2, der einen Referenzdruckraum 3 festlegt, welcher von einer Membran 4 überspannt ist. Die Membran 4 umfaßt eine innere, kreisförmige Elektrode 5, welche eine druckabhängige Meßkapazität $C_s$ festlegt, sowie eine äußere, im wesentlichen kreisringförmige Elektrode 6, die eine im wesentlichen druckunabhängige Referenzkapazität $C_r$ bildet.

Eine Auswertungsschaltung für die bekannte Druckmeßanordnung ist in Fig. 18 dargestellt und umfaßt eine Gleichspannungsquelle $U_G$. Die Referenzkapazität $C_r$ ist über ein erstes Schaltelement S1 wahlweise mit der Gleichspannungsquelle $U_G$ verbindbar oder an den invertierenden Eingang eines Operationsverstärkers anlegbar, dessen nicht-invertierender Eingang an Masse liegt. Zwischen dem invertierenden Eingang und dem Ausgang liegt ein kondensator $C_k$. Die Meßkapazität $C_s$ ist mittels eines zweiten Schaltelementes S2 mit einer Elektrode alternativ mit dem invertierenden Eingang oder mit dem Ausgang des Operationsverstärkers OPV verbindbar, während die andere Elektrode des Meßkondensators $C_s$ gegen Masse gelegt ist. Einem Summationspunkt SP, an dem die Spannung der Gleichspannungsquelle $U_G$ liegt, wird die Ausgangsspannung des Operationsverstärkers OPV mit negativem Vorzeichen zugeführt. Für den Fachmann ist es offensichtlich, daß die Ausgangsspannung des Operationsverstärkers proportional zur Referenzkapazität $C_r$ und umgekehrt proportional zur Meßkapazität $C_s$ ist. Da diese dem Summationspunkt SP mit negativem Vorzeichen zugeführt wird, hat die Schaltung folgende Übertragungsfunktion:

$$F = \frac{C_s - C_r}{C_s}$$

Die nachfolgende Ableitung wird zeigen, daß die in Fig. 19 dargestellte Krümmung der Membran 4, auf der die Elektroden 5, 6 angeordnet sind, zu einer Nichtlinearität des Ausgangssignales in Abhängigkeit von dem zu messenden Druck führt.

Für die Membrandurchbiegung w(r) gilt folgender Zusammenhang unter den Voraussetzungen, daß die Dicke der Membran viel kleiner als deren Durchmesser und größer als die Durchbiegung w ist:

$$(1) \qquad w(r) = \frac{p}{64D} = (R^2 - r^2)^2$$

Hierin ist r der betrachtete Radius, R der Membranradius, p der Druck und D die Biegefestigkeit. Für diese gilt:

$$(2) \qquad D = \frac{Eh^3}{12(1-\nu^2)}$$

E ist der Elastizitätsmodul, h die Dicke der Membran (s. Fig. 19) und ν die Querkontraktionszahl.

Für die Sensorkapazität gilt folgendes Integral:

$$(3) \qquad C_s(p) = \int_{o}^{r^*R} \frac{\varepsilon_o \cdot 2 \cdot \pi \cdot r^* dr^*}{d - w(r^*)}$$

$\varepsilon_o$ ist die Vakuum-Di-elektrizitätskonstante. wobei r* der normierte Radius ist. Die Lösung des Integrals ergibt folgende Abhängigkeit der Sensorkapazität $C_s$:

$$(4) \qquad C_s(p) = \frac{1}{2} C_o \sqrt{\frac{Po}{P}} \ln \frac{\frac{Po}{P} + r^{*2} \sqrt{\frac{Po}{P}} + r^{*2} - 1}{\frac{Po}{P} + r^{*2} \sqrt{\frac{Po}{P}} + r^{*2} - 1}$$

In der Gleichung (4) sind als neu eingeführte Konstanten enthalten die Grundkapazität $C_0$ und der Auflagedruck $p_0$. Für diese Größen gilt folgender Zusammehang:

$$(5) \qquad C_s(O) = r^{*2} \cdot C_o \; ; \; r^* = r/R \text{ (s. Fig. 19)}$$

$$(6) \qquad C_o = \varepsilon_o \cdot \frac{\pi R^2}{d}$$

$$p_o = \frac{16}{3} \cdot \frac{d \cdot E \cdot h^3}{R^4\,(1-\nu^2)} \qquad (7)$$

Man erkennt aus der Übertragungsfunktion F, der Auswertungsschaltung gemäß Fig. 18 sowie aus der Druckabhängigkeit der Sensorkapazität $C_s$, wie sie in Gleichung (4) angegeben ist, daß die bekannte Druckmeßanordnung einen nicht-linearen Zusammenhang der Ausgangsspannung von dem Druck zeigt.

Da die Kennlinie der Sensorkapazität in erster Näherung hyperbelförmig ist, kann durch Kehrwertbildung eine gewisse Linearisierung erzeugt werden, was bei der in Fig. 18 gezeigten Schaltung nach dem Stand der Technik dadurch erfolgt, daß die Sensorkapazität $C_s$ im Rückkopplungszweig der Auswerteschaltung eingebaut ist. Eine solche Schaltung nach dem Stand der Technik ist etwa um den Faktor vier bis fünf linearer verglichen mit Druckmeßanordnungen, bei denen die Meßkapazität am Eingang und die Referenzkapazität im Rückkopplungszweig einer Auswertungsschaltung liegt.

Da es sich jedoch bei der Kennlinie der Meßkapazität oder Sensorkapazität $C_s$ nicht um eine exakte Hyperbelfunktion handelt, ist es nicht möglich, mit einer Druckmeßanordnung nach den Fig. 17 bis 19 eine Nullstelle in der Fehlerfunktion zu erzeugen.

Die Fachveröffentlichung U. Schöneberg et al., A CMOS-Read-out-Amplifier For Instrumentation Applications, in "ESSCIRC '90, Gif-sur-Yvette, Ed. Frontieres 1990, Seiten 208 bis 210, zeigt eine Drucksensoranordnung mit einer Auswerteschaltung mit präzisierter Übertragungsfunktion, welche proportional zur druckabhängigen Meßkapazität vermindert um eine druckunabhängige Referenzkapazität ist. Die im Nenner der Übertragungsfunktion angegebene weitere Kapazität ist eine konstante Größe. Diese Schaltung dient zur Erfassung des Kapazitätswertes kapazitiver Sensoren und damit auch für die Messung des Kapazitätswertes von kapazitiven Drucksensoren. Diese Drucksensoranordnung mit kapazitivem Drucksensor und der Auswertungsschaltung ist für eine einzige druckabhängige Kapazität bestimmt, die dort mit dem Bezugszeichen CSEN1, CSEN2 bezeichnet ist. Alle anderen Kapazitäten der bekannten Auswerteschaltung sind konstante druckunanhängige Größen.

Wie bereits oben erläutert, hat diese bekannte Druckmeßanordnung eine Ausgangsspannung, die wegen der nichtlinearen Abhängigkeit zwischen Druck und Sensorkapazität ebenalls nichtlinear ist.

Der Erfindung liegt, ausgehend von diesem Stand der Technik die Aufgabe zugrunde, eine Druckmeßanordnung anzugeben, die eine erhöhte und damit verbesserte Linearität hat. Die Lösung besteht in der im Anspruch 1 definierten Druckmeßanordnung.

Zum Stand der Technik ist noch nachzutragen, daß aus der US-A 45 42 436 eine Druckmeßanordnung, allerdings mit nur zwei druckabhängigen Kapazitäten, bereits bekannt ist, bei der die auf der Membran befindliche Fläche der einen Kapazität die ebenfalls auf der Membran befindliche Fläche der anderen Kapazität, die die Form eines dreizakkigen Sterns mit verbreiterten Zacken hat, vollständig mit praktisch konstantem Abstand umgibt.

Legt man (ex post) ein (nicht erwähntes) Polar-Koordinatensystem in den Mittelpunkt der Membran, so läßt sich aus Fig. 4 der US-A 45 42 436 ablesen, daß die beiden Flächen einen (ebenfalls nicht erwähnten) sich entgegengesetzt ändernden radiusabhängigen Winkelverlauf haben.

Die Erfindung geht davon aus, daß eine verbesserte Linearität einer Druckmeßanordnung dann erzielt werden kann, wenn die Drucksensorstruktur eine eine druckabhängige, weitere Kapazität $C_f$ bildende weitere Elektrode aufweist und wenn eine Auswertungsschaltung verwendet wird, deren Übertragungsfunktion proportional zur Differenz der Meßkapazität $C_s$ und der Referenzkapazität $C_r$ dividiert durch die weitere Kapazität $C_f$ ist. Die Verwendung einer solchen zusätzlichen druckabhängigen Kapazität $C_f$ in einer Auswertungsschaltung mit der genannten Übertragungsfunktion ermöglicht es, eine Nullstelle in der Fehlerfunktion f zu erzeugen. In der Übertragungsfunktion F wird die Differenz von Meßkapazität $C_s$ und Referenzkapazität $C_r$ mit der weiteren Kapazität $C_f$, die als Rückkoppelkapazität geschaltet sein kann, so bewertet, daß in der Mitte des gewünschten Druckbereiches in der Fehlerfunktion f eine Nullstelle entsteht. Hierdurch wird beim Erfindungsgegenstand der quadratische Linearitätsfehler der bekannten Drucksensoranordnungen eliminiert.

Zur Erhöhung der Linearität sieht die Erfindung, ausgehend von diesem Grundkonzept, vor, daß die Meßelektrode und die weitere Elektrode, die beide auf der Membran angeordnet sind, jeweils in Abhängigkeit von dem Radius sich entgegengesetzt zueinander ändernde Winkelerstreckungen haben.

Bevorzugte Weiterbildungen sind in den Unteransprüchen angegeben.

Die Erfindung wird nun unter Bezugnahme auf die Zeichnung näher erläutert.

Es zeigen:

| | |
|---|---|
| Fig. 1 | eine Drucksensorstruktur einer Druckmeßanordnung; |
| Fig. 2 | eine Auswertungsschaltung für die in Fig. 1 gezeigte Drucksensorstruktur; |
| Fig. 3A, 3B | eine weitere Drucksensorstruktur; |

| | |
|---|---|
| Fig. 4 | eine Auswertungsschaltung für die in den Fig. 3A, 3B gezeigte Drucksensorstruktur; |
| Fig. 5 | noch eine weitere Drucksensorstruktur; |
| Fig. 6 | eine Auswertungsschaltung für die in Fig. 5 gezeigte Drucksensorstruktur; |
| Fig. 7 | zeitliche Verläufe von Steuersignalen innerhalb der Schaltung gemäß Fig. 6; |
| Fig. 8A bis 8D | eine Darstellung zur Erläuterung der Normierung der Funktionen; |
| Fig. 9 | eine Darstellung des Linearitätsfehlers von bekannten Druckmeßanordnungen mit zwei Kapazitäten im Vergleich mit dem Linearitätsfehler von bekannten Druckmeßanordnungen mit drei Kapazitäten, jeweils in Abhangigkeit von dem Meßdruck; |
| Fig. 10 | eine Darstellung der radiusabhängigen Winkelerstreckungen einer Meßelektrode und einer weiteren Elektrode eines Ausführungsbeispiels der Drucksensorstruktur nach der Erfindung; |
| Fig. 11 | den Winkelverlauf der in Fig. 10 gezeigten Elektrodenstruktur bezogen auf einen normierten Radius; |
| Fig. 12 | eine Gegenüberstellung des Linearitätsfehlers der Druckmeßanordnung nach Fig. 1-9 und der erfindungsgemäßen Druckmeßanordnung; |
| Fig. 13 bis 16 | verschiedene Ausführungsbeispiele erfindungsgemäßer Elektrodenstrukturen; |
| Fig. 17 | eine Drucksensorstruktur einer bekannten Druckmeßanordnung; |
| Fig. 18 | eine Auswertungsschaltung einer bekannten Druckmeßanordnung; und |
| Fig. 19 | eine schematische Darstellung der Drucksensorstruktur gemäß Fig. 17. |

Wie in Fig. 1 gezeigt ist, umfaßt die Drucksensorstruktur, welche in ihrer Gesamtheit mit dem Bezugszeichen 10 bezeichnet ist zwei im wesentlichen kreissektorförmige Elektrodenflächen 11,12, die eine erste und zweite Meßkapazität $C_{s1}$, $C_{s2}$ festlegen, sowie zwei weitere, ebenfalls im wesentlichen kreissektorförmige Elektrodenflächen 13, 14, die zwei weitere, druckabhängige Kapazitäten $C_{f1}$, $C_{f2}$ festlegen.

Diese Elektrodenflächen 11, 12, 13, 14 sind von zwei Referenzelektrodenflächen 15, 16 mit Abstand umgeben, die jeweils eine im wesentlichen halbkreisringförmige Gestalt haben und eine erste und zweite Referenzkapazität $C_{r1}$, $C_{r2}$ bilden. Die Flächeninhalte und somit auch die Kapazitäten $C_{fl}$, $C_{f2}$ der weiteren Elektrodenflächen 13, 14 sind geringer als diejenigen der im wesentlichen kreissektorförmigen Elektrodenflächen 11, 12 einen geringeren prozentualen Flächenanteil im Bereich der Membranmitte verglichen mit der Flächenverteilung der weiteren Elektrodenflächen 13, 14 haben. Dies bewirkt, daß die prozentuale Änderung der weiteren Kapazität $C_{f1}$, $C_{f2}$ in Abhängigkeit vom Druck größer ist als die prozentuale Änderung der Meßkapazität $C_{s1}$, $C_{s2}$ in Abhängigkeit vom Druck. Diese Art der Gestaltung der Druckabhängigkeit der Meßkapazität $C_{s1}$, $C_{s2}$ und der weiteren Kapazität $C_{f1}$, $C_{f2}$ trägt zur weiteren Verbesserung der Linearität der Drucksensorstruktur bei. Die stärkere Druckabhängigkeit der weiteren Kapazität $C_{f1}$, $C_{f2}$ bezogen auf die Druckabhängigkeit der Meßkapazität $C_{s1}$, $C_{s2}$ wird in Fig. 1 dadurch erreicht, daß die Elektrodenflächen 11, 12 in ihrem inneren radialen Bereich eine kreisförmige Ausnehmung haben, während die weiteren Elektrodenflächen 13, 14 im Mittenbereich in halbkreisförmige Elektrodenflächenelemente 17, 18 übergehen.

Fig. 2 zeigt eine Auswertungsschaltung. Eine Gleichspannungsquelle $U_G$ ist mittels eines ersten bzw. zweiten Schalters 20, 21 in alternierender Polung an einen ersten bzw. zweiten Knoten 22, 23 legbar. Zwischen den Knoten 22, 23 liegt die Reihenschaltung der ersten Meßkapazität $C_{s1}$ mit der zweiten Referenzkapazität $C_{r2}$ einerseits und die Reihenschaltung der ersten Referenzkapazität $C_{r1}$ mit der zweiten Meßkapazität $C_{s2}$. Die gemeinsamen Knoten der jeweiligen Meßkapazität $C_{s1}$, $C_{s2}$ und der Referenzkapazität $C_{r1}$, $C_{r2}$ sind mit den Eingängen eines Differenzpfadverstärkers 24 verbunden. Zwischen dem invertierenden Eingang und dem nicht-invertierenden Ausgang des Differenzpfadverstärkers 24 liegt die erste druckabhängige, weitere Kapazität $C_{f1}$. Zwischen dem nicht-invertierenden Eingang und dem invertierenden Ausgang liegt die zweite druckabhängige weitere Kapazität $C_{f2}$. Parallel zu diesen weiteren druckabhängigen Kapazitäten $C_{f1}$, $C_{f2}$ liegt ein dritter und vierter Schalter 25, 26, die gleichzeitig zum Entladen dieser Kapazitäten in Synchronisation mit der Betätigung der Schalter 20, 21 durch ein erstes und ein zweiten Steuersignal $T_1$, $T_2$ angesteuert werden.

Bei der anschließenden Beschreibung der Fig. 3A, 3B und Fig. 4 werden mit den Fig. 1 und 2 übereinstimmende

Teile und Schaltungselemente mit gleichen Bezugszeichen bezeichnet, so daß sich die nachfolgende Beschreibung auf die Abweichungen beschränken kann.

Fig. 3A zeigt die Anordnung der Elektroden auf der Membran, während Fig. 3B die Anordnung der gegenüberliegenden Elektroden am Grund des Sensorkörpers 2 verdeutlicht. Die Anordnung gemäß Fig. 3B entspricht der in Fig. 1 gezeigten Struktur. Die entsprechenden Gegenelektroden auf der Membranseite gemäß Fig. 3A sind mit den gleichen Bezugszeichen, jeweils versehen mit einem Apostroph, bezeichnet. Bei den Grundelektroden ist die erste Referenzelektrodenfläche 16 mit der ersten weiteren, kreissektorförmigen Elektrodenfläche 13 und der ersten Sensorelektrode 11 verbunden. Ebenso ist die zweite weitere, kreissektorförmige Elektrodenfläche 14 mit der zweiten Referenzelektrodenfläche 15 und der zweiten Sensorelektrode 12 verbunden (entspricht Verbindung von Knoten 21 und 23; drei Kondensatoren verbunden).

Auf der Membranelektrodenseite steht die erste kreissektorförmige Elektrodenfläche 11' mit der zweiten Referenzelektrodenfläche 15' in Verbindung. Ebenso steht die zweite kreissektorförmige Elektrodenfläche 12' mit der ersten Referenzelektrodenfläche 16' in Verbindung. Die beiden Referenzelektrodenflächen 15', 16' auf der Membranelektrodenseite sind mit einem ersten und zweiten Kontakt K1, K2 versehen. Ebenso sind auf dieser Seite die beiden weiteren Elektrodenflächen 13', 14' mit einem fünften und sechsten Kontakt K5, K6 versehen. Auf der Grundelektrodenseite sind die beiden Referenzelektrodenflächen 15, 16 mit einem dritten und vierten Kontakt K3, K4 versehen.

In der Fig. 4 sind anstelle der Umschalter 20, 21 gemäß Fig. 2 für den gleichen Zweck einfache Schalter 20', 20", 21', 21" vorgesehen. Wie ersichtlich ist, ist der erste Knoten 22 mit dem ersten Kontakt K1 und der zweite Knoten 23 mit dem zweiten Kontakt K2 verbunden. Der dritte Kontakt K3 liegt am invertierenden Eingang des Differenzpfadverstärkers 24. Der vierte Kontakt K4 liegt am nicht-invertierenden Eingang desselben. Zwischen diesen Eingängen und Masse liegen zwei weitere parasitäre Kapazitäten $C_{M1}$, $C_{M2}$.

In Reihe zu den weiteren druckabhängigen Kapazitäten $C_{f1}$, $C_{f2}$ liegt ein fünfter und sechster Schalter 27, 28, der jeweils mit dem zweiten Steuersignal $T_2$ betätigt wird, mit dem auch die Schalter 21', 20" betätigt werden. Parallel zu den weiteren druckabhängigen Kapazitäten $C_{f1}$, $C_{f2}$ und den hierzu in Reihe geschalteten Schaltern 27, 28 liegt jeweils die Reihenschaltung aus einer Haltekapazität $C_{H1}$, $C_{H2}$ und einem siebten bzw. achten Schalter 29, 30, welche mit einem verzögerten Signal $T_1$' geschlossen werden, das zeitlich verzögert gegenüber dem Steuersignal $T_1$ ist, mit dem die Schalter 20', 21" geschlossen werden. Die gemeinsamen Knoten der Haltekapazitäten $C_{H1}$, $C_{H2}$ und des siebten bzw. achten Schalters 29, 30 sowie der weiteren druckabhängigen Kapazitäten $C_{f1}$, $C_{f2}$ und der fünften und sechsten Schalter 27, 28 sind über einen neunten und zehnten Schalter bzw. einen elften und zwölften Schalter jeweils bei Auftreten des ersten Steuersignales $T_1$ bzw. des verzögerten zweiten Steuersignales $T_2$' mit Spannungsquellen $U_M$ verbindbar.

Fig. 5 zeigt eine weitere Drucksensorstruktur. Diejenigen Teile der in Fig. 5 gezeigten Drucksensorstruktur, welche mit der Drucksensorstruktur nach den Fig. 1 bzw. 3B übereinstimmen, sind mit gleichen Bezugszeichen bezeichnet, denen der unterscheidende Zusatz (a) beigefügt ist. Infolgedessen kann auf eine erneute Beschreibung gleicher oder ähnlicher Teile verzichtet werden.

Die Drucksensorstruktur 1a gemäß Fig. 5 unterscheidet sich im wesentlich dahingehend von der Drucksensorstruktur nach den Fig. 1 und 3B, daß eine einzige Referenzelektrodenfläche 15a im wesentlichen in Form eines fast vollständig geschlossenen Ringes vorgesehen ist. Diese Referenzelektrodenfläche 15a legt eine einzige Referenzkapazität $C_r$ fest.

Die beiden weiteren, im wesentlichen kreissektorförmigen Elektrodenflächen 13, 14 bei der Ausführungsform gemäß Fig. 1, Fig. 3B gehen hier im Bereich der halbkreisförmigen Elektrodenflächenelemente 17, 18 einstückig zur Bildung einer einzigen, weiteren Elektrodenfläche lla ineinander über, welche die weitere druckabhängige Kapazität $C_f$ festlegt.

In ähnlicher Weise sind die beiden Elektrodenflächen 11, 12 gemäß Fig. 1 in Fig. 5 zu einer Fläche 11a verbunden und bilden eine einzige Meßkapazität $C_s$. Die Meßkapazität $C_s$, die weitere druckabhängige Kapazität $C_f$ und die Referenzkapazität $C_r$ sind an Anschlüssen N1, N2, N3 erfaßbar. Der weitere Anschluß N4 dient zur Kontaktierung einer ganzflächigen, nicht gezeigten Gegenelektrode.

Die in Fig. 6 gezeigte Auswertungsschaltung, die in ihrer Gesamtheit mit dem Bezugszeichen 35 bezeichnet ist, umfaßt eine Gleichspannungsquelle $U_G$, welche in der bereits beschriebenen Art über vier Schalter 36 bis 39 in einer ersten bzw. zweiten Polung mit dem ersten bzw. dritten Anschluß N1, N3 der Drucksensorstruktur la verbindbar ist. Der vierte Anschluß N4 der Drucksensorstruktur la ist mit dem invertierenden Eingang eines Verstärkers 40 verbunden, dessen nicht-invertierender Eingang an Masse liegt. Der zweite Anschluß N2 der Drucksensorstruktur 1a, an den die Referenzelektrode 15a geschaltet ist, ist über einen Schalter 41 gegen Masse und mit einem Schalter 42 gegen den Ausgang des Verstärkers 40 schaltbar. Eine Haltekapazität $C_H$ liegt parallel zu diesem Rückkopplungszweig und in Serie zu einem Schalter 43. Der gemeinsame Knoten des Schalters 43 und des Haltekondensators $C_H$ ist mit einem Schalter 44 gegen Masse schaltbar. Die Schalter 36, 39 werden mit einem zweiten Steuersignal T2 angesteuert. Die Schalter 37, 38 werden mit einem ersten Steuersignal $T_1$ angesteuert. Deren Signalverlauf ist in Fig. 7 dargestellt. Gleichfalls wird der Schalter 41 mit dem ersten Steuersignal $T_1$ angesteuert, während der Schalter 42 mit dem zweiten Steuersignal $T_2$ angesteuert wird. Die Schalter 43, 44 werden mit dem verzögerten ersten bzw. zweiten Steuersignal

$T_1'$, $T_2'$ angesteuert, wobei diese Signale zeitlich verzögert gegenüber dem ersten und zweiten Steuersignal sind.

Eingangs wurde die druckabhängige Kapazität eines kapazitiven Drucksensors vom Membrantyp unter Bezugnahme auf die Gleichungen (1) bis (7) abgeleitet. Die nachfolgende Betrachtung wird zeigen, daß die bisher beschriebenen Drucksensorstrukturen einen erheblich verminderten Linearitätsfehler gegenüber der Drucksensorstruktur nach dem Stand der Technik hat, und daß der Linearitätsfehler dieser Drucksensorstruktur sich nicht nur anhand von einfachen Versuchen, sondern auch rechnerisch optimieren läßt, was anhand der nachfolgend hergeleiteten Zusammenhänge erfolgen kann.

Die Referenzkapazität mit der in Fig. 1 gezeigten Struktur errechnet sich als Kapazität eines Kreisringes aus der Gleichung (4) folgendermaßen:

$$(8) \qquad C_r(p) = C\,(p,\, r^*_{rA}) - C\,(p,\, r^*_{r1})$$

Dabei ist $r^*_{rA}$ der normierte Außenradius und $r^*_{rI}$ der normierte Innenradius des Kreisrings.

Für den Fall der fehlenden Druckbeaufschlagung ergibt sich folgender Grundkapazitätswert:

$$(9) \qquad C_r(0) = ({r^*}^2_{rA} - {r^*}^2_{rI}) \cdot C_o$$

Die Übertragungsfunktion F der Auswertungsschaltung lautet:

$$(10) \qquad F = \frac{(C_{s1}+C_{s2}) - (C_{r1}+C_{r2})}{C_{f1} + C_{f2}} = \frac{C_s - C_r}{C_f}$$

Wie in Fig. 3B angedeutet ist, bezeichnet der Winkel $\pi.\alpha$ das Bogenmaß der weiteren kreissektorförmigen Elektrodenflächen 13, 14. Mit $r_I^*$ ist der Radius der halbkreisförmigen Elektrodenflächenelemente 17, 18 bezeichnet. Mit $r_s{}^*{}_1$ ist der Innenradius der kreissektorförmigen Elektrodenflächen bezeichnet. Mit $r_{s2}^*$ ist deren Außenradius bezeichnet. Mit $r_{r1}^*$ ist der Innenradius der Referenzelektrodenfläche bezeichnet, deren Außenradius R als Bezugsgröße zur Normierung der erstgenannten Radien dient.

Mit diesen Größen ergibt sich aus der Gleichung (10) folgender Zusammenhang für die Übertragungsfunktion F:

$$(11) \qquad F = \frac{(1-\alpha)\,[C_s(p,\, r^*_{s2}) - C_s(p,\, r^*_{s1})]\alpha_s - C_r\alpha_r}{\alpha C_s(p,\, r^*_{s2}) - (1-\alpha) C_s(p,\, r^*_I)\alpha_f}$$

In dieser Formel beziehen sich $\alpha_s$ auf die Sensorelektrode, $\alpha_r$ auf die Referenzelektrode und $\alpha_f$ auf die Rückkopplungselektrode.

Unter Bezugnahme auf die Fig. 8A bis 8D soll nunmehr die Normierung der Funktionen erläutert werden. Fig. 8A zeigt den druckabhängigen Verlauf der Übertragungsfunktion F, wobei $F_1$ den Maximalwert und $F_0$ den Minimalwert bezeichnen.

In Fig. 8B ist der Verlauf von F(p) minus $F_0$ dargestellt.

Fig. 8C zeigt die Kurve gemäß Fig. 8B bezogen auf den Hub, d.h.

$$\frac{F\,(p) - F_0}{F_1 - F_0}$$

Damit ergibt sich folgender Zusammenhang für den in Fig. 8D dargestellten Linearitätsfehler:

$$(12) \qquad f_{(F)} = \frac{F(p) - F_0}{F_1 - F_0} - \frac{p}{p_{max}}$$

Der Linearitätsfehler f(F) läßt sich mit einem rechnergestützten Optimierungsverfahren, wie beispielsweise dem Levenberg-Marquardt-Verfahren durch Variation folgender Parameter optimieren:

$\alpha$ : Winkel der Elektrodenflächen 13, 14;

$r_1$: Radius des Elektrodenflächenelementes 17, 18;

$r_r$: Innerer Radius der Referenzelektrode 15, 16;

$r_s$: Äußerer Radius der Sensor-Elektrode 11, 12.

Folgende Zielfunktionen wurden vorgegeben:

$$FA = F\,(p = 0) \rightarrow 0;$$

$$FB = F\,(p = 0{,}5\, p_{max}) - 0{,}5 \rightarrow 0;$$

$$FC = F(p = p_{max}) -1 \rightarrow 0; \text{ und}$$

$$FD = r_s + d_{min} - r_r \rightarrow 0.$$

Hierbei sind: $p_{max}$ der maximal angelegte Nenndruck, $d_{min}$ der Mindestabstand der Elektroden.

Der Linearitätsfehler gemäß Gleichung (12) der normierten Ausgangsspannung für eine Drucksensorstruktur nach dem Stand der Technik mit einem kapazitiven Drucksensorelement im Eingangszweig ist in Fig. 9 mit $f(C_s)$ bezeichnet. Der Linearitätsfehler einer verbesserten Schaltung nach dem Stand der Technik ist in Fig. 9 mit

$$f\left(1-\frac{C_r}{C_s}\right)$$

bezeichnet.

Wie ferner in Fig. 9 zu sehen ist, ist der Linearitätsfehler der Schaltung, der mit

$$f\left(\frac{C_s-C_r}{C_f}\right)$$

bezeichnet ist, eine Funktion, die etwa um den Faktor 10 gegenüber der besterreichbaren Linearitätsfehlerkurve von Drucksensorstrukturen mit nur zwei Elektroden verbessert ist.

Wenn anstelle der soeben beschriebenen Optimierung mit vier Parametern weitere Parameter zur Linearisierung verwendet werden, läßt sich eine nochmalige Verbesserung der Linearität erreichen.

Im Gegensatz zu der Sensorstruktur, wie sie beispielsweise unter Bezugnahme auf Fig. 1 beschrieben wurde, sieht nun das in Fig. 10 gezeigte Ausführungsbeispiel der Erfindung vor, daß die Meßelektrode 11b und die weitere Elektrode 13b jeweils in Abhängigkeit von ihrem Radius sich entgegengesetzt zueinander ändernde Winkelerstreckungen haben. Es sind also die druckabhängige Meßelektrode 11b und die druckabhängige weitere Elektrode 13b voneinander durch eine Grenzlinie getrennt, die einen radiusabhängigen Winkelverlauf $\alpha(r)$ hat. Meßelektrode und die weitere Elektrode können voneinander durch einen im wesentlichen gleichbleibenden Abstand $d_m$ getrennt sein. Dieser Abstand bezieht sich auf den Abstand der genannten Elektroden 11b, 13b senkrecht zu dem jeweiligen radiusabhängigen Winkelverlauf $\alpha(r)$, vgl. Fig. 10.

Miteinander decken diese beiden druckabhängigen Meßelektroden 11b, 13b in Fig. 10 mit Ausnahme des Abstandsbereichs, der durch den Abstand $d_m$ gebildet ist, die Membran 4b bis zu einem normierten Radius von 0,74 ab, während die Referenzelektrode 15b den radial äußeren Kreisringbereich innerhalb eines normierten Radiusbereiches von 0,78 bis 0,97 abdeckt.

Wie insbesondere aus einem Vergleich der Figuren 10, 13, 14, 15 und 16 ersichtlich ist, können jeweils punktsymmetrische Teilelektrodenpaare beliebiger äußerer Verknüpfung vorgesehen sein, die jeweils den in Fig. 10 gezeigten Elektrodenbereich abdecken. Natürlich ist es gleichfalls möglich, auf einer einzigen Membran nur eine einzige Meßelektrode und eine einzige weitere Elektrode sowie eine einzige Referenzelektrode zu realisieren. In diesem Fall kann der zweite Hälftenteil der Elektrode spiegelsymmetrisch an die in Fig. 10 gezeigte Elektrodenhälfte anschließen, so daß sowohl die Meßelektrode als auch die weitere Elektrode in diesem Fall die jeweils doppelte Winkelerstreckung haben. Denkbar, wenn auch nicht weiter vorteilhaft, wäre auch eine weitere Unterteilung der Vollkreisfläche beispielsweise in Viertelkreise oder Achtelkreise, auf denen dann je eine Meßelektrode und eine weitere Elektrode mit radiusabhängigem Winkelverlauf der gegenseitigen Grenze realisiert wäre. In diesem Fall müssen die in Fig. 11 angegebenen Winkel anstatt auf den Halbkreis von 180° auf das betreffende Segment bezogen werden.

Wie man in Fig. 10 erkennt, entspricht der dort angegebene Winkelverlauf $\alpha(r)$ im wesentlichen der Winkelerstreckung der weiteren Elektrode 13b, welche die weitere druckabhängige Kapazität $C_{f1}$ festlegt. Umgekehrt entspricht hier der Winkelverlauf der Meßelektrode llb dem Wert 180° vermindert um den Wert des radiusabhängigen Winkelverlaufes $\alpha(r)$.

Mit anderen Worten ergänzen sich die beiden Radialerstreckungen der beiden druckabhängigen Elektroden 11b, 13b mit Ausnahme des genannten Abstandes $d_m$ bei der Ausführungsform von Fig. 10 jeweils zu 180°. Wie erwähnt, können sich jedoch die Winkel auch zu einem Vollkreis von 360° oder einem beliebigen Teil eines Vollkreises ergänzen, wobei im letztgenannten Fall ein entsprechend sich wiederholendes Muster entsteht.

Fig. 11 zeigt den auf die normierte Radiusskala bezogenen radiusabhängigen Winkelverlauf. Wie erwähnt, liegt die

Referenzelektrode 15b in einem normierten Radiusbereich von etwa 0,78 bis etwa 0,97. Daher erstrecken sich die Meßelektrode 11b und die weitere druckabhängige Elektrode 13b nur bis zu einem normierten Radius von 0,74. Der Winkelverlauf beginnt im Mittelpunkt bei einem Wert von 90°, steigt kontinuierlich an bis zu einem Wert von etwa 115° bei einem normierten Radius von 0,14, zeigt ein erstes leichtes Minimum von etwa 111° bei einem normierten Radius von etwa 0,18, zeigt ein weiteres, schwaches Maximum von etwa 116° bei einem normierten Radius von etwa 0,24, sinkt dann kontinuierlich ab bis zu einem Minimalwert von 90°, der sich bei einem normierten Radius von etwa 0,375 einstellt, woraufhin ein kontinuierlicher Anstieg bis zu einem ausgeprägten Maximum von etwa 118° bei einem normierten Radius von 0,5 zu verzeichnen ist. Im Anschluß hieran fällt der radiusabhängige Winkel bis zu einem Wert von 0° ab, der bei dem normierten Radius von 0,74 erreicht wird.

Fig. 13 und 14 bzw. 15 und 16 zeigen jeweils zusammengehörige Elektrodenpaare. Die obere und untere Elektrode gemäß Fig. 13 und 14 haben jeweils die gleiche Gestalt, welche der unter Bezugnahme auf Fig. 10 beschriebenen Gestalt entspricht. Die Elektrodenpaare nach den Fig. 15 und 16 sind dahingehend abweichend, daß die Gegenelektrode von Fig. 16 als Vollelektrode ausgestaltet ist, während die auf der Membran ausgebildete Elektrodenstruktur nach Fig. 15 in Abweichung von Fig. 13 so ausgestaltet ist, daß die beiden weiteren druckabhängigen Elektroden $C_f$ durch einen Steg, der den Mittelpunkt durchläuft, miteinander verbunden sind, während die beiden Meßelektroden $C_s$ durch einen in radialer Richtung verlaufenden Steg verbunden sind.

Die in den Fig. 13 und 14 dargestellte Elektrodenstruktur (Elektrode und Gegenelektrode) eignet sich dazu, mit dem in Fig. 4 gezeigten Differenzpfadverstärker betrieben zu werden. Die vereinfachte Elektroden-Gegenelektroden-Ausgestaltung nach den Fig. 15 und 16 hingegen kann nur mit der einfachen Verstärkerschaltung nach Fig. 7 betrieben werden.

In Fig. 12 ist die Fehlerfunktion bzw. der Linearitätsfehler der Drucksensoranordnung nach den Fig. 1 bis 9 mit der Druckmeßanordnung nach der Erfindung verglichen. Man erkennt, daß mit den Maßnahmen der Erfindung ein sehr kleiner maximaler Linearitätsfehler von weniger als 0,01 Prozent über einen erweiterten Druckbereich erzielt wird. Der maximale Druckbereich liegt nur knapp unter dem sogenannten Auflagedruck p0, bei dem sich die einander gegenüberliegenden Elektroden berühren. Der Arbeitsdruckbereich der Druckmeßanordnung läßt sich gegenüber demjenigen bei den Fig. 1 bis 9 mehr als verdoppeln.

**Patentansprüche**

**1.** Druckmeßanordnung mit

- einer Drucksensorstruktur, die eine Membran (4b) aufweist, deren druckabhängige Durchbiegung kapazitiv mittels einer eine druckabhängige Meßkapazität $C_s$ bildenden, auf der Membran angeordneten Meßelektrode (llb) erfaßbar ist,
- einer eine weitere druckabhängige Kapazität $C_f$ bildenden, auf der Membran (4b) angeordneten weiteren Elektrode (13b),
- wobei die Meßelektrode (11b) und die weitere Elektrode (13b) bezüglich eines auf den Mittelpunkt der Membran bezogenen Polar-Koordinaten-Systems einen sich entgegengesetzt ändernden radiusabhängigen Winkelverlauf ($\alpha[r]$) haben,
- einer konstanten Referenzkapazität $C_r$ und
- einer durch Kapazitätsmessung den Druck ableitenden Auswertungsschaltung mit folgender Übertragungsfunktion (F):

$$F = [C_s(p) - C_r]/C_f(p).$$

**2.** Druckmeßanordnung nach Anspruch 1, bei der die Meßelektrode (11b) und die weitere Elektrode (13b) mit einem im wesentlichen gleichbleibenden Abstand ($d_m$) voneinander dem radiusabhängigen Winkelverlauf ($\alpha[r]$) folgen.

**3.** Druckmeßanordnung nach Anspruch 2, bei der die weitere Elektrode (13b) im wesentlichen den radiusabhängigen Winkelverlauf ($\alpha[r]$) aufweist.

**4.** Druckmeßanordnung nach Anspruch 3, bei der der radiusabhängige Winkelverlauf der Meßelektrode (11b) im wesentlichen gleich ($180° - \alpha[r]$) ist.

**5.** Druckmeßanordnung nach einem der Ansprüche 1 bis 4, bei der die Referenzkapazität ($C_r$) von einer Referenzelektrode (15b) gebildet ist, die auf einem äußeren Bereich der Membran (4b) ausgebildet ist.

**6.** Druckmeßanordnung nach Anspruch 5, bei der die Referenzelektrode (15b) in einem Bereich zwischen etwa 0,78

und etwa 0,97 des normierten Radius (r*) angeordnet ist, wobei der normierte Radius (r*) die auf auf den Radius (R) der Membran bezogene Radiusvariable (r* = r/R) ist.

7. Druckmeßanordnung nach den Ansprüchen 5 und 6, bei der der radiusabhängige Winkelverlauf der in Fig. 11 dargestellten Kurve folgt.

## Claims

1. A pressure-measuring arrangement comprising:

- a pressure-sensor structure comprising a diaphragm (4b) whose pressure-dependent deflection is measurable capacitively by means of a measuring electrode (11b) disposed on the diaphragm and forming a pressure-dependent measuring capacitance $C_s$;
- a further pressure-dependent electrode (13b) disposed on the diaphragm (4b) and forming a further capacitance $C_f$;
- the measuring electrode (11b) and the further electrode (13b) having radius-dependent angle profiles ($\alpha[r]$) which change oppositely to each other with respect to a polar-coordinate system referred to the center of the diaphragm;
- a constant reference capacitance $C_r$; and
- an evaluating circuit which derives the pressure by a capacitance measurement and has the following transfer function (F):

$$F = [C_s(p) - C_r]C_f(p).$$

2. A pressure-measuring arrangement as claimed in claim 1 wherein the measuring electrode (11b) and the further electrode (13b) follow the radius-dependent angle profile ($\alpha[r]$) at an essentially constant distance ($d_m$) from each other.

3. A pressure-measuring arrangement as claimed in claim 2 wherein the further electrode (13b) has essentially the radius-dependent angle profile ($\alpha[r]$).

4. A pressure-measuring arrangement as claimed in claim 3 wherein the radius-dependent angle profile of the measuring electrode (11b) is essentially equal to ($180° - \alpha[r]$).

5. A pressure-measuring arrangement as claimed in any one of claims 1 to 4 wherein the reference capacitance ($C_r$) is formed by a reference electrode (15b) which is implemented in an outer area of the diaphragm (4b).

6. A pressure-measuring arrangement as claimed in claim 5 wherein the reference electrode (15b) is disposed in an area between approximately 0.78 and approximately 0.97 of the normalized radius (r*), the normalized radius (r*) being the radius variable (r* = r/R) referred to the radius (R) of the diaphragm.

7. A pressure-measuring arrangement as claimed in claims 5 and 6 wherein the radius-dependent angle profile follows the curve shown in Fig. 11.

## Revendications

1. Dispositif de mesure de la pression comprenant :

- une structure de capteur de pression qui présente une membrane (4b) dont la flèche fonction de la pression peut être captée par voie capacitive au moyen d'une électrode de mesure (11b) disposée sur la membrane et qui forme une capacité de mesure $C_S$ fonction de la pression,
- une électrode additionnelle (13b), disposée sur la membrane (4b), qui forme une capacité additionnelle $C_f$ fonction de la pression,
- l'électrode de mesure (11b) et l'électrode additionnelle (13b) ayant, dans un système de coordonnées polaires rapportées au centre de la membrane, des courbes représentatives de l'angle en fonction du rayon ($\alpha[r]$) qui varient l'une en sens inverse de l'autre,

- une capacité de référence constante $C_r$ et
- un circuit d'analyse qui dérive la pression par mesure de la capacité, et qui a la fonction de transfert suivante (F) :

$$F = [C_s(p) - C_r]/C_f(p).$$

**2.** Dispositif selon la revendication 1, dans lequel l'électrode de mesure (11b) et l'électrode additionnelle (13b) suivent la courbe représentative de l'angle en fonction du rayon ($\alpha[r]$) en conservant un écartement mutuel ($d_m$) sensiblement constant.

**3.** Dispositif de mesure de la pression selon la revendication 2, dans lequel l'électrode additionnelle (13b) présente sensiblement la courbe représentative de l'angle en fonction du rayon ($\alpha[r]$).

**4.** Dispositif de mesure de la pression selon la revendication 3, dans lequel la courbe représentative de l'angle de l'électrode de mesure (11b) en fonction du rayon est sensiblement identique à ($180° -\alpha[r]$).

**5.** Dispositif de mesure de la pression selon une des revendications 1 à 4, dans lequel la capacité de référence ($C_r$) est formée par une électrode de référence (15b) qui est formée sur une région extérieure de la membrane (4b) .

**6.** Dispositif de mesure de la pression selon la revendication 5, dans lequel l'électrode de référence (15b) est disposée dans une région comprise entre environ 0,78 et environ 0,97 du rayon normé ($r^*$), le rayon normé ($r^*$) étant la variable rayon ($r^* = r/R$) rapportée au rayon (R) de la membrane.

**7.** Dispositif de mesure de la pression selon les revendications 5 et 6, dans lequel la courbe représentative de l'angle en fonction du rayon suit la courbe représentée sur la figure 11.

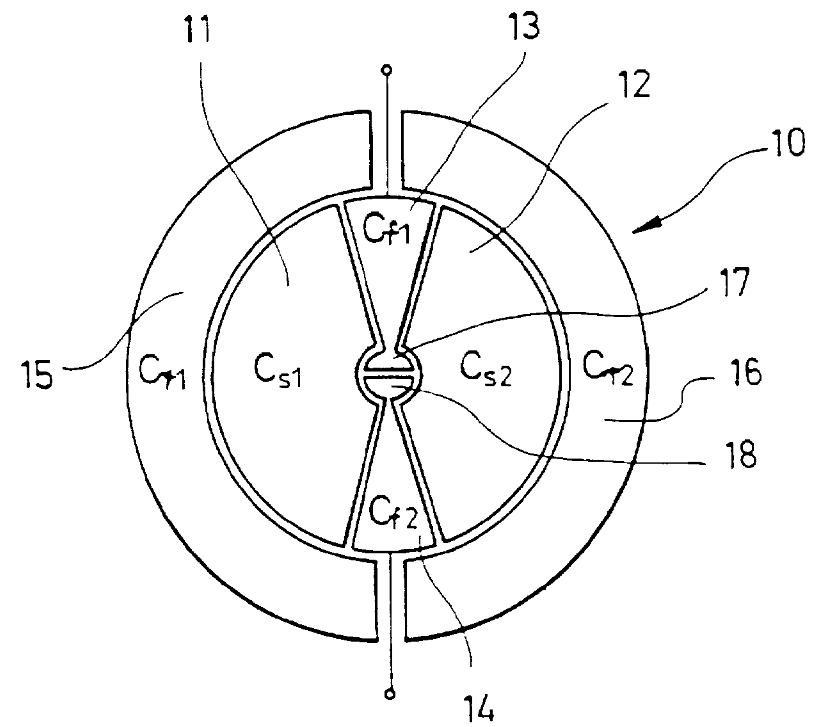
11
13
12
10
17
15
$C_{r1}$
$C_{s1}$
$C_{s2}$
$C_{r2}$
16
18
$C_{f1}$
$C_{f2}$
14

FIG.1

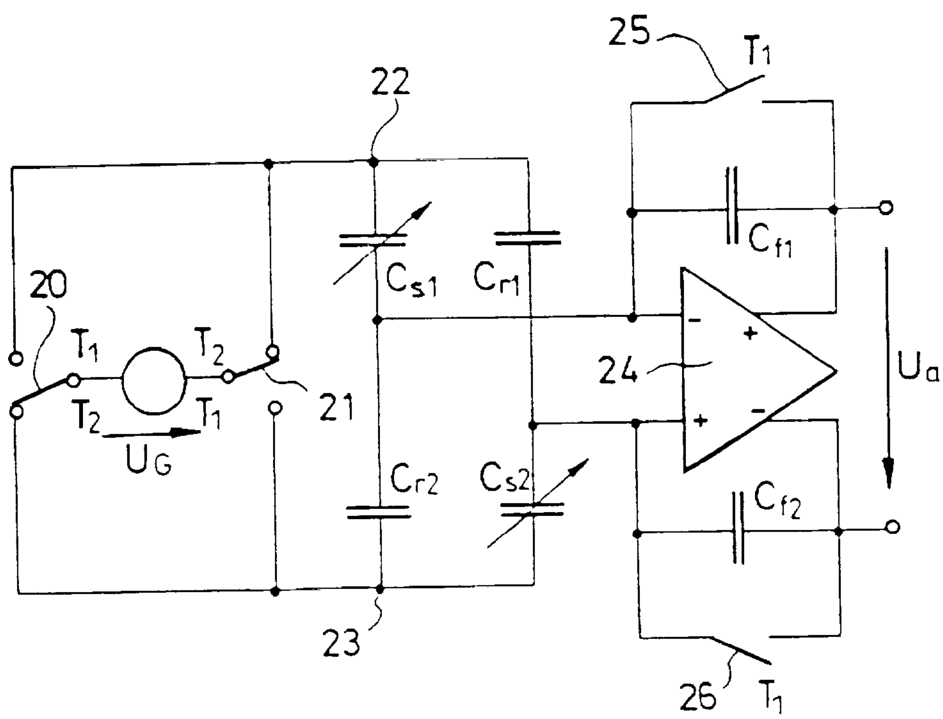
25
$T_1$
22
$C_{f1}$
$C_{s1}$
$C_{r1}$
20
$T_1$
$T_2$
21
$T_2$
$T_1$
$U_G$
24
$U_a$
$C_{r2}$
$C_{s2}$
$C_{f2}$
23
26
$T_1$

FIG.2

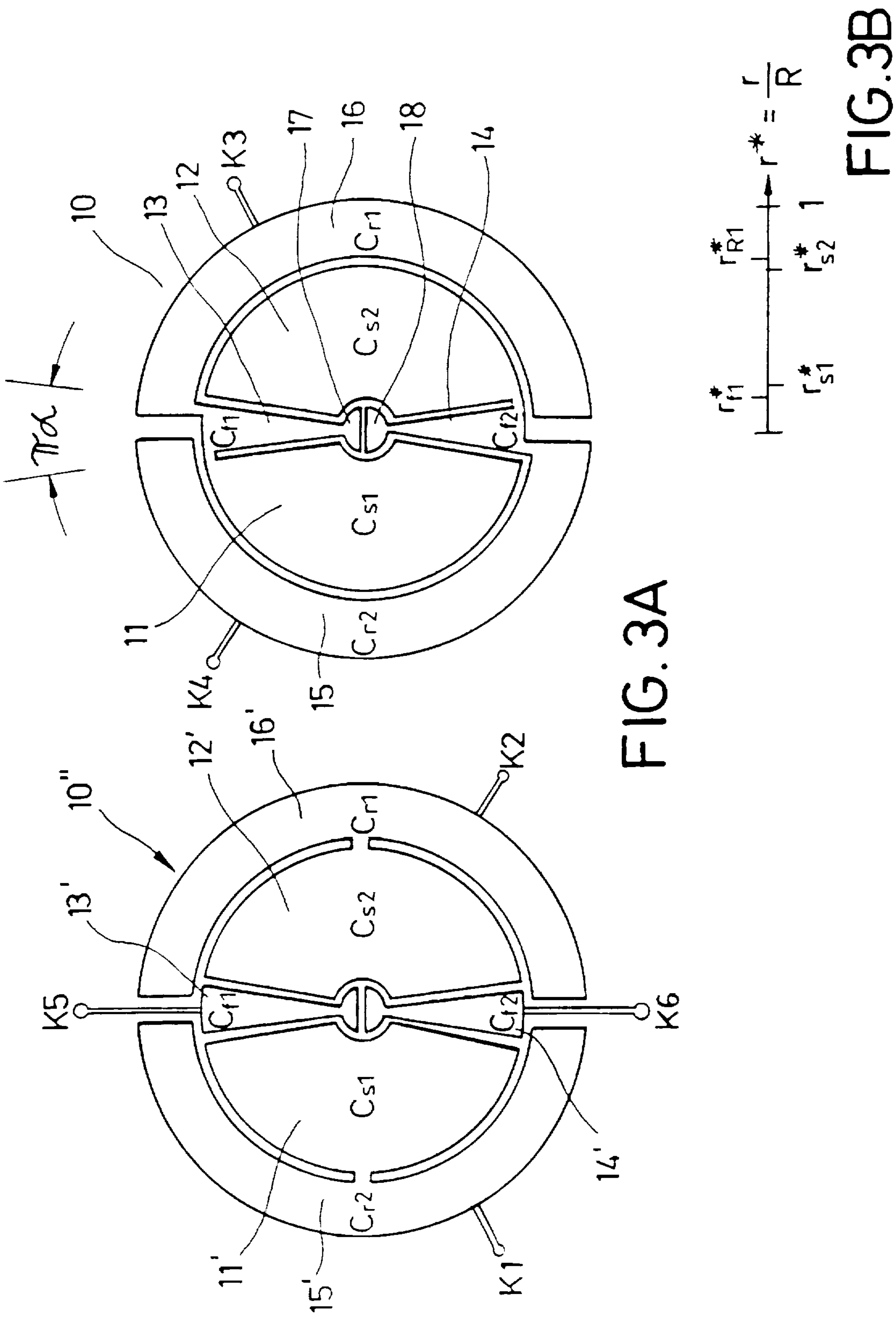
10
11
12
13
14
15
16
17
18
K1
K2
K3
K4
K5
K6
10"
11'
12'
13'
14'
15'
16'
πα
r* = r/R
1


FIG. 3A

FIG.3B

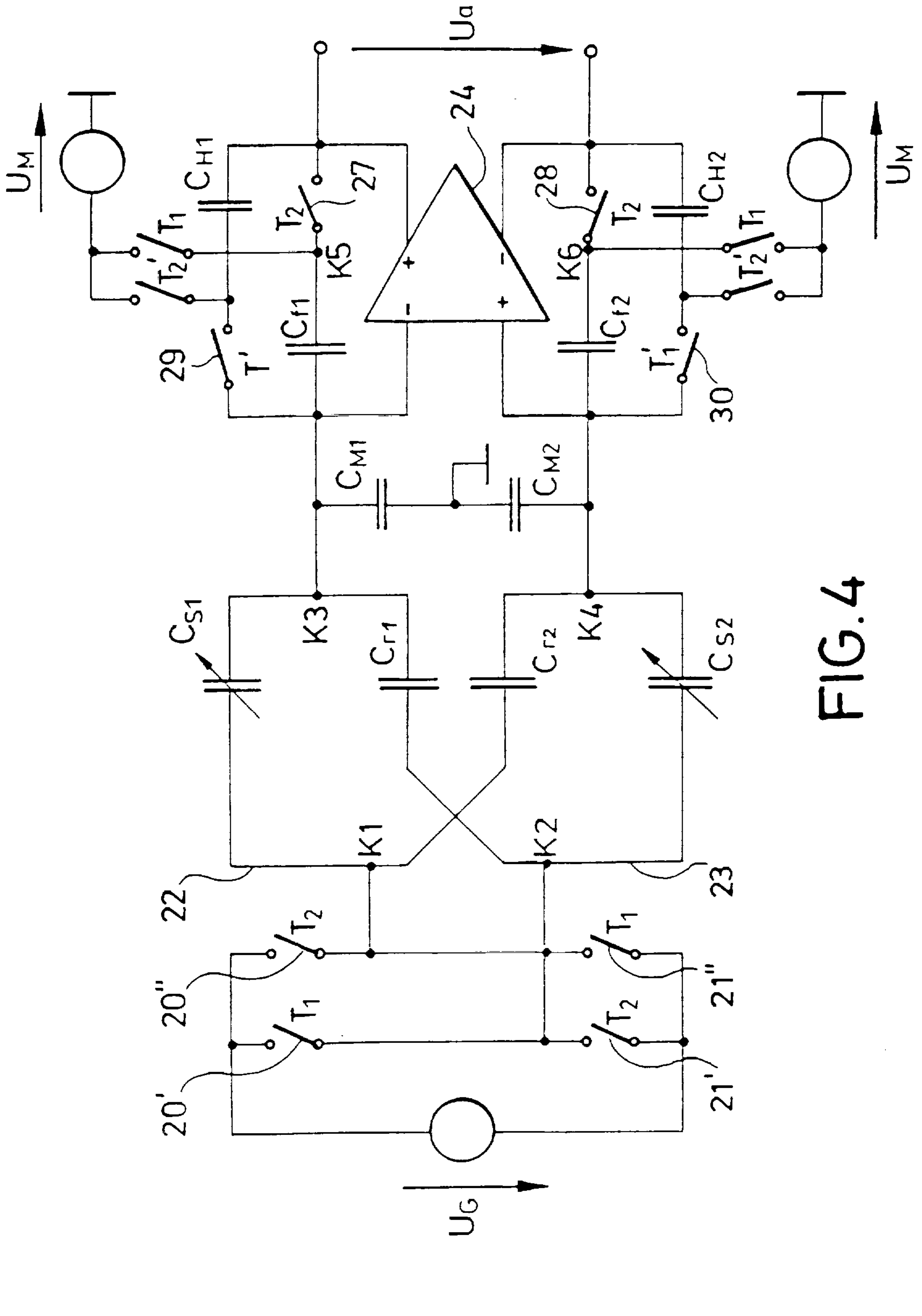

UM
CH1
T1
T2'
T2
27
K5
Cf1
T'
29
Ua
24
28
CH2
K6
Cf2
T1'
30
CM1
CM2
CS1
K3
Cr1
Cr2
K4
CS2
K1
K2
22
23
20''
20'
21''
21'
UG


FIG.4

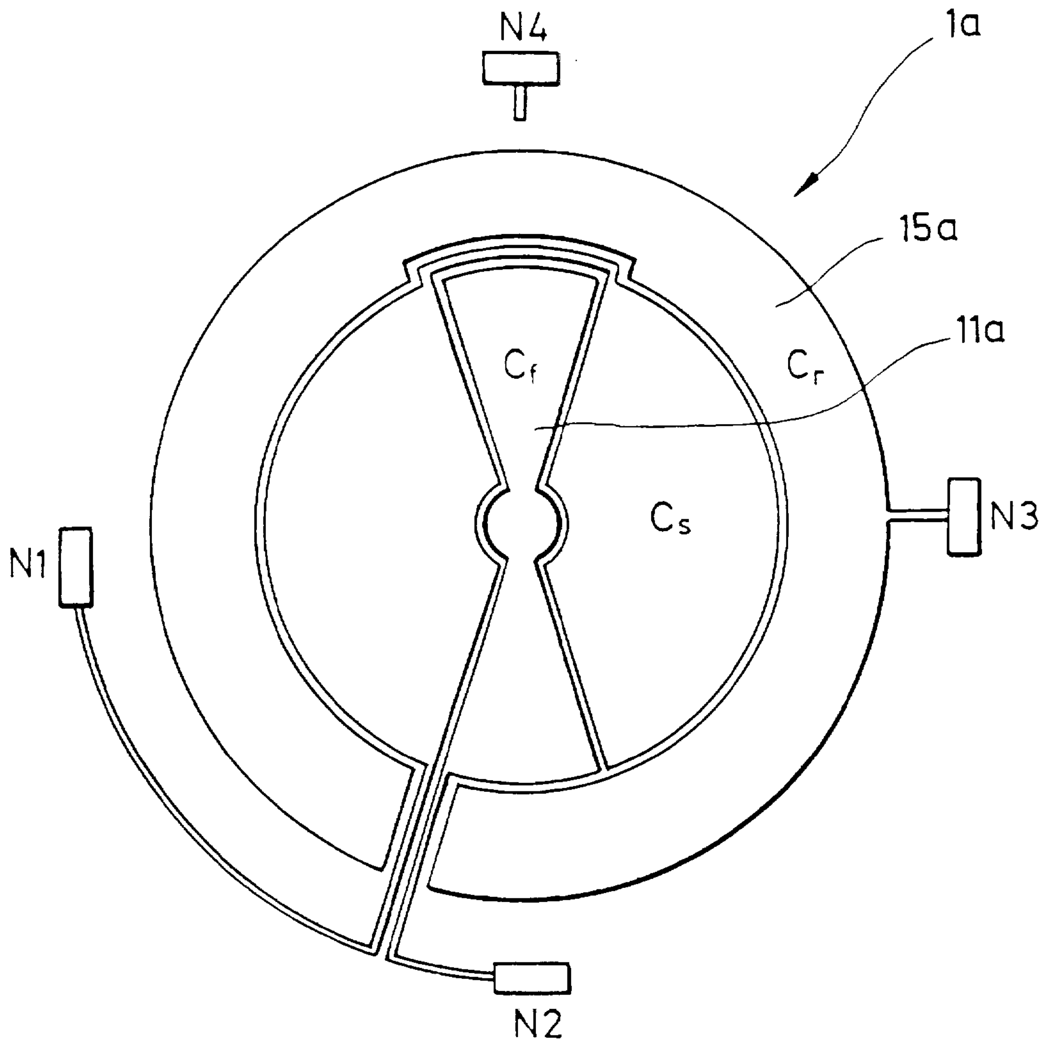


FIG. 5

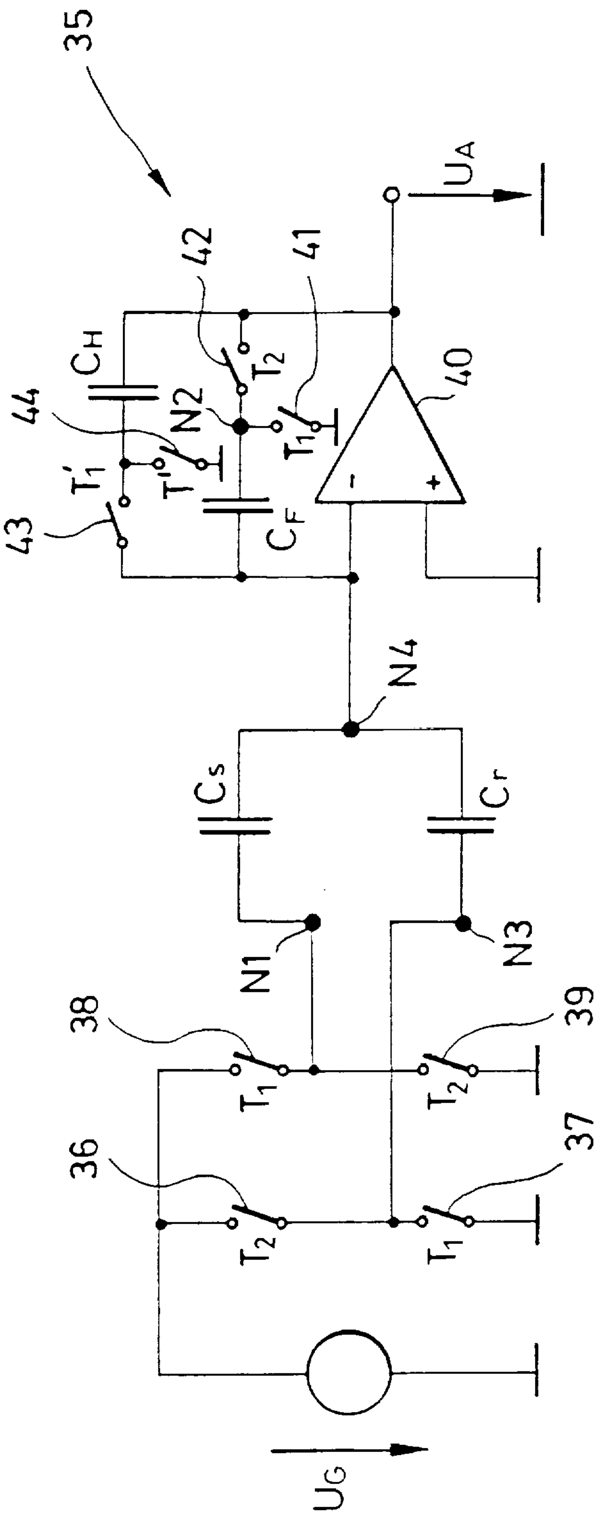
35
42
41
44
43
$C_H$
$T_1'$
$T''$
N2
$T_2$
$T_1$
$C_F$
40
$U_A$
N4
$C_s$
$C_r$
N1
N3
38
39
36
37
$T_1$
$T_2$
$T_2$
$T_1$
$U_G$

FIG.6

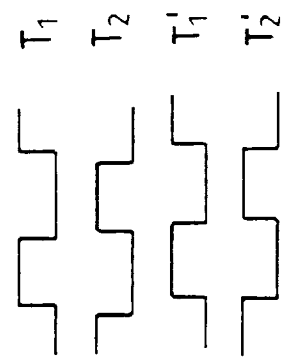
$T_1$
$T_2$
$T_1'$
$T_2'$

FIG.7

FIG.8A

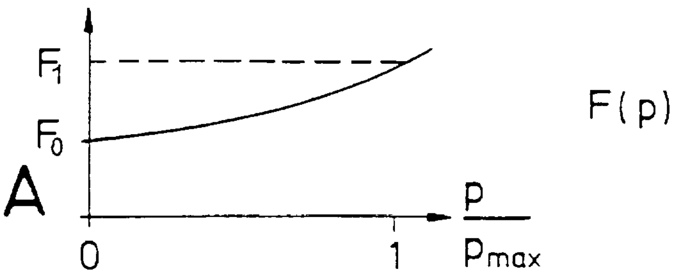


FIG.8B

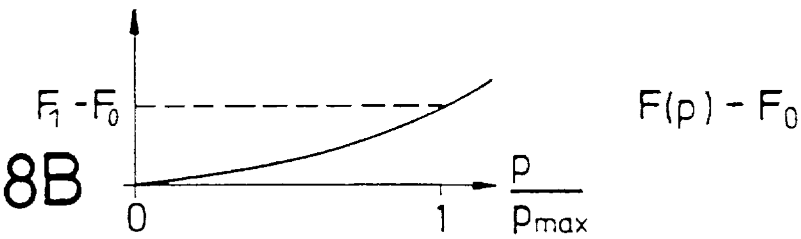


FIG.8C

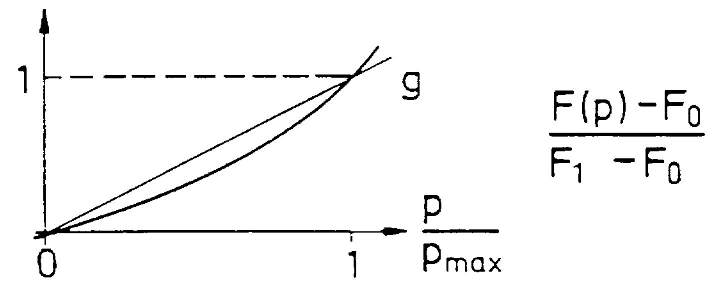


FIG.8D

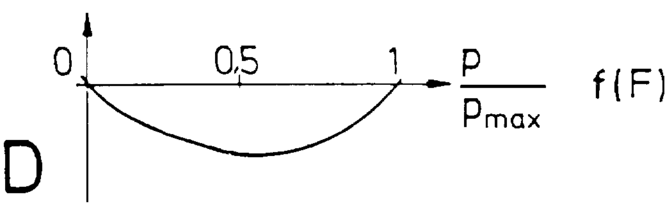

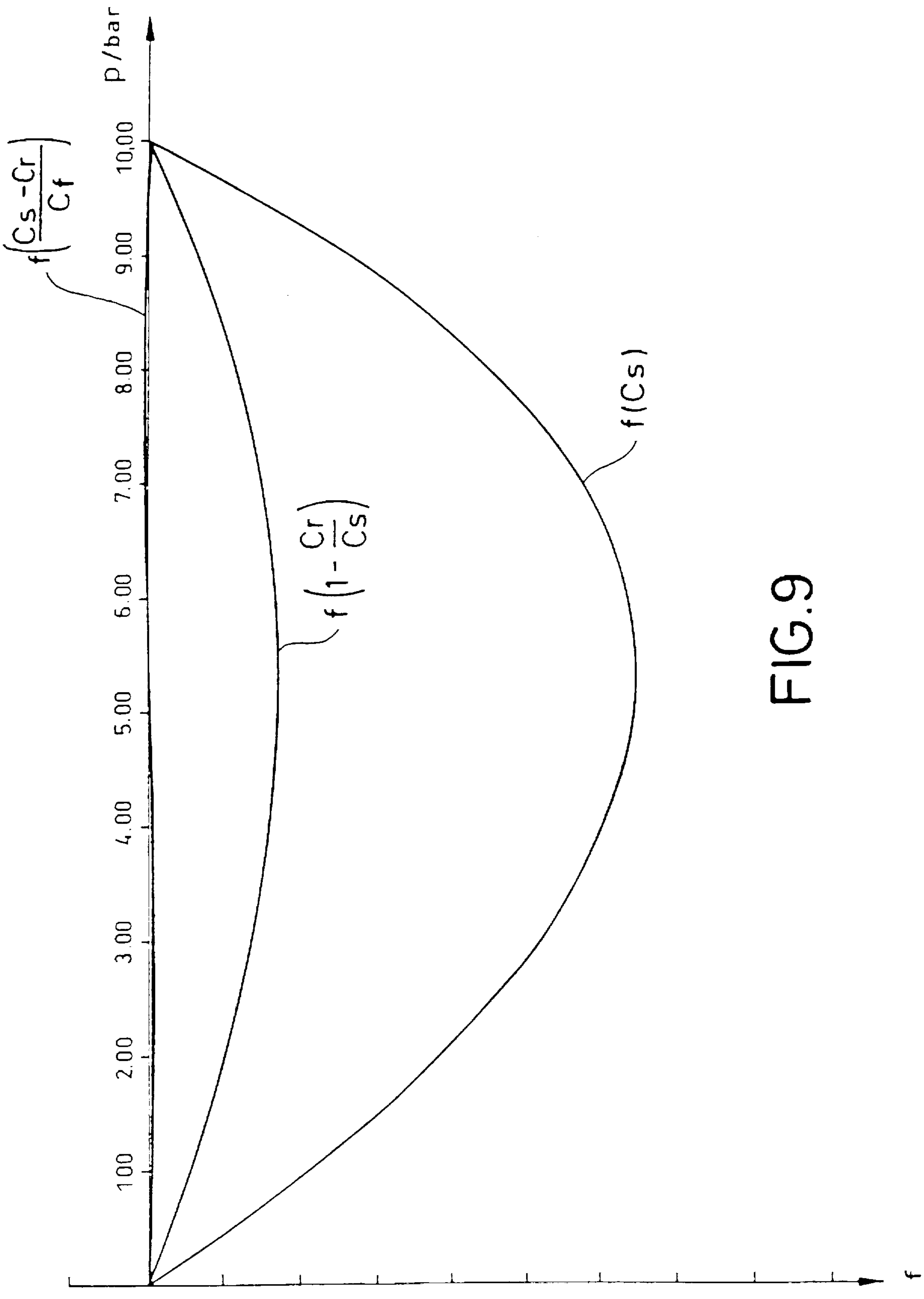
p /bar
f
10.00
9.00
8.00
7.00
6.00
5.00
4.00
3.00
2.00
1.00
0.01
0.00
-0.01
-0.02
-0.03
-0.04
-0.05
-0.06
-0.07
-0.08
-0.09
f(Cs)
f(1 - Cr/Cs)
f((Cs -Cr)/Cf)

FIG.9

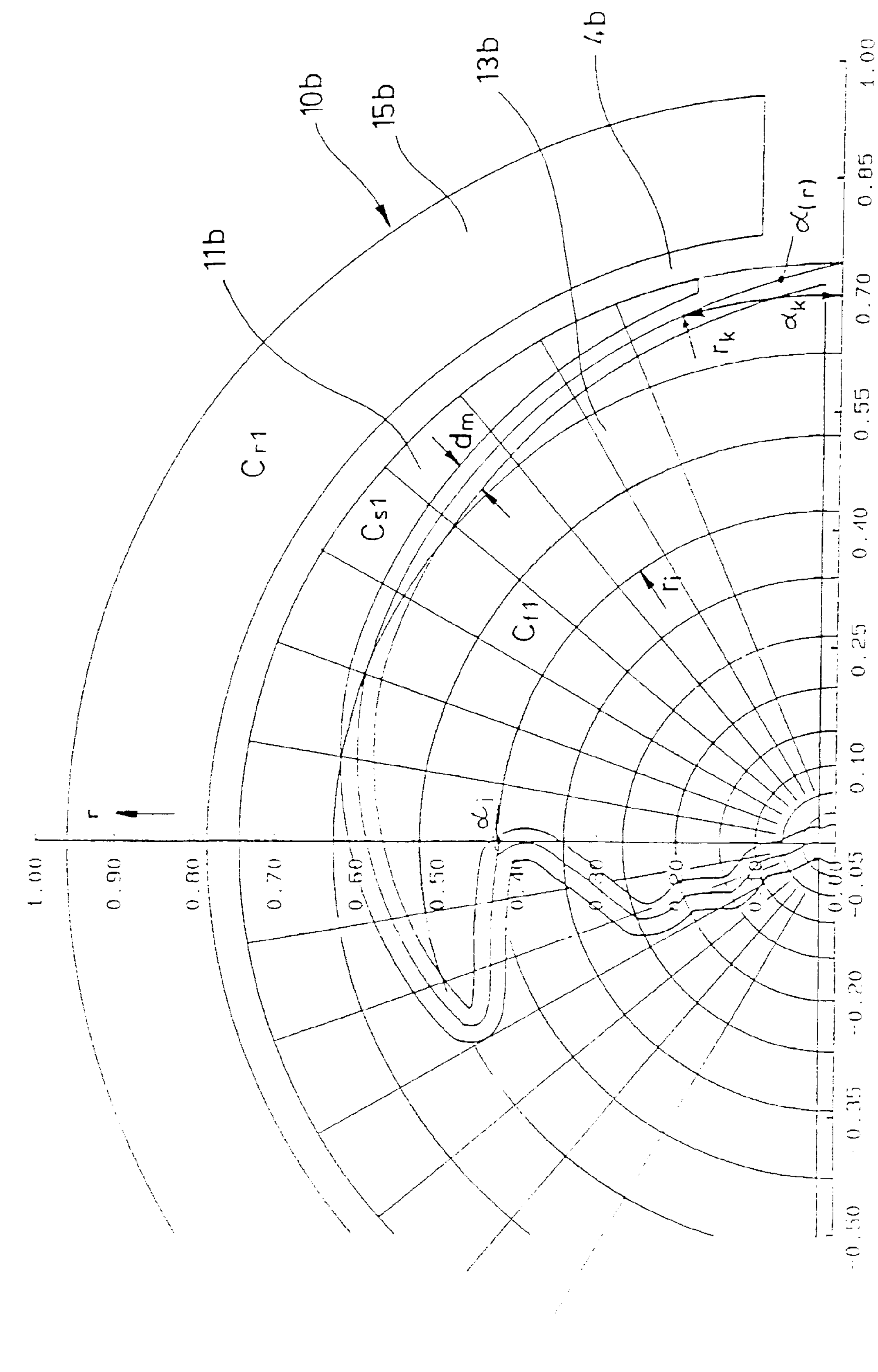
10b
15b
13b
4b
11b
$C_{r1}$
$C_{s1}$
$C_{f1}$
$d_m$
$r_i$
$r_k$
$\alpha_k$
$\alpha_{(r)}$
$\alpha_i$
r
r
1.00
0.85
0.70
0.55
0.40
0.25
0.10
-0.05
-0.20
-0.35
-0.50
1.00
0.90
0.80
0.70
0.60
0.50
0.40
0.30
0.20
0.10
0.00

FIG.10

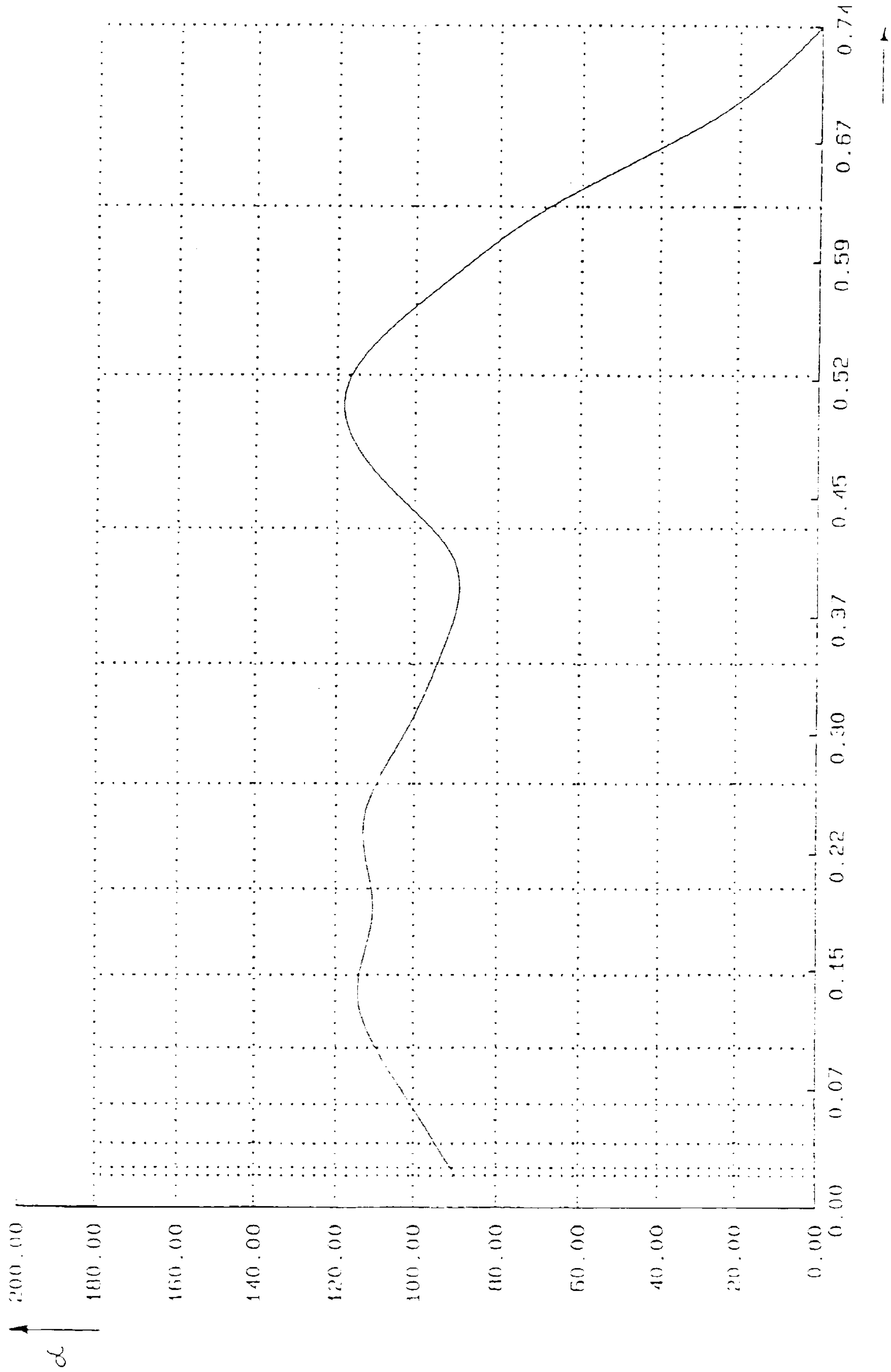
α
200.00
180.00
160.00
140.00
120.00
100.00
80.00
60.00
40.00
20.00
0.00
0.00
0.07
0.15
0.22
0.30
0.37
0.45
0.52
0.59
0.67
0.74
r

FIG.11

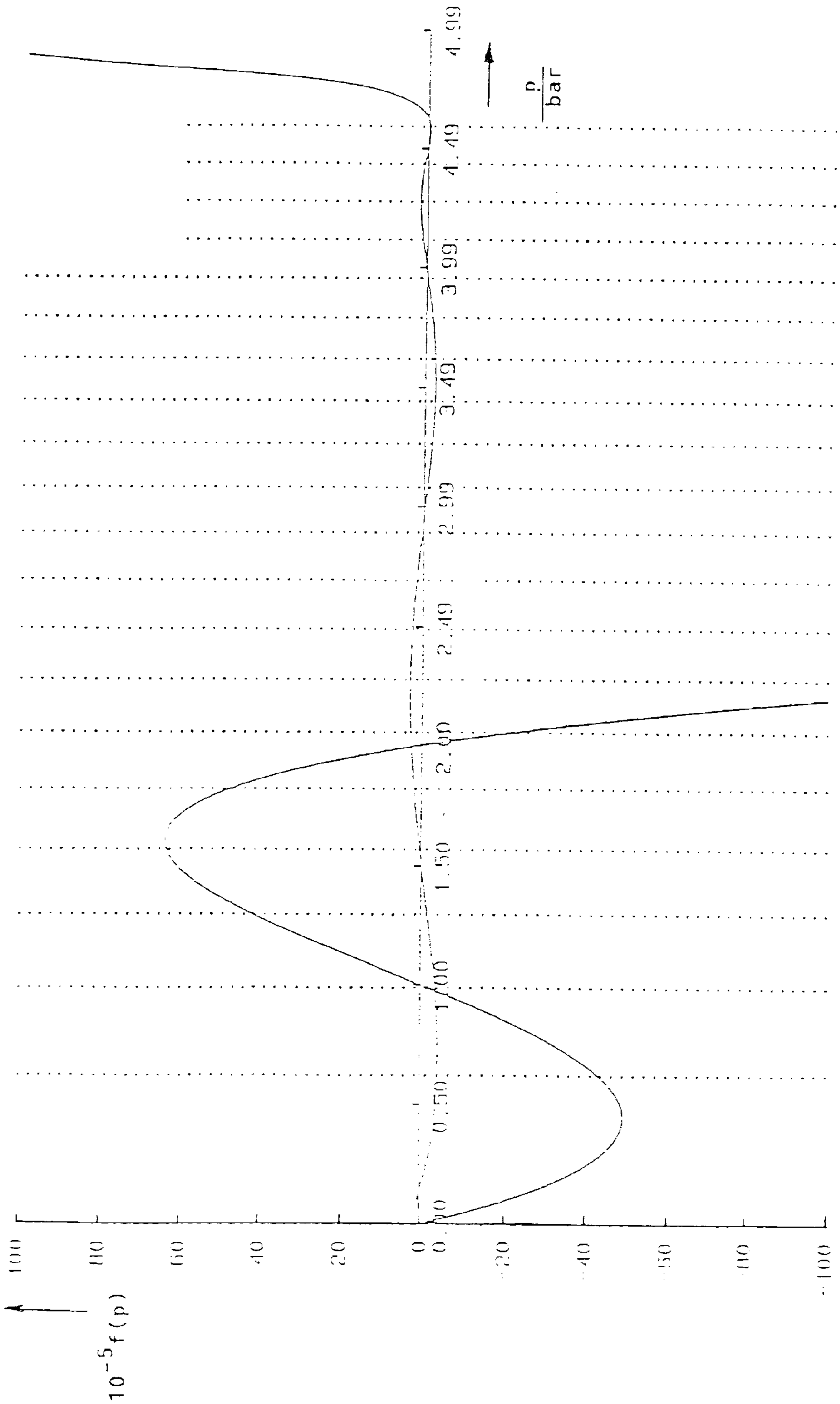

100
80
60
40
20
0
0
-20
-40
-60
-80
-100
$10^{-5}$ f(p)
0.50
1.00
1.50
2.00
2.49
2.99
3.49
3.99
4.49
4.99
p/bar


FIG.12

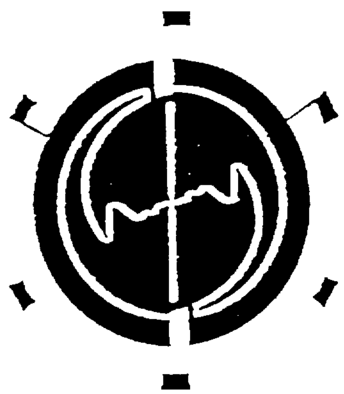

FIG.13

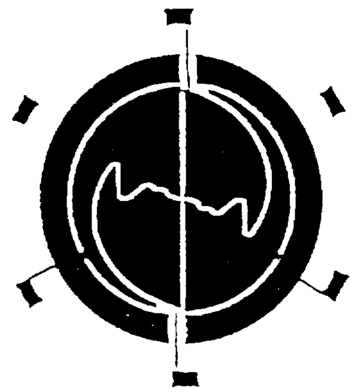

FIG.14

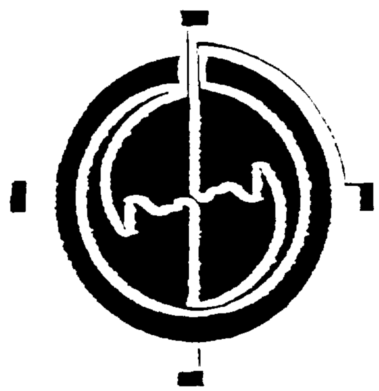

FIG.15

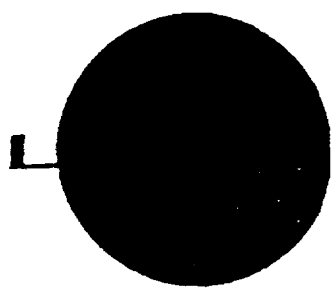

FIG.16

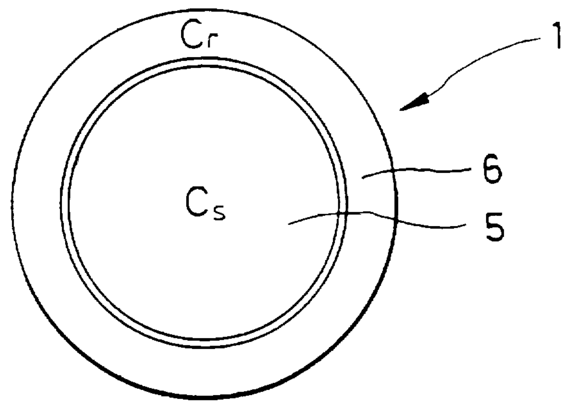


FIG.17

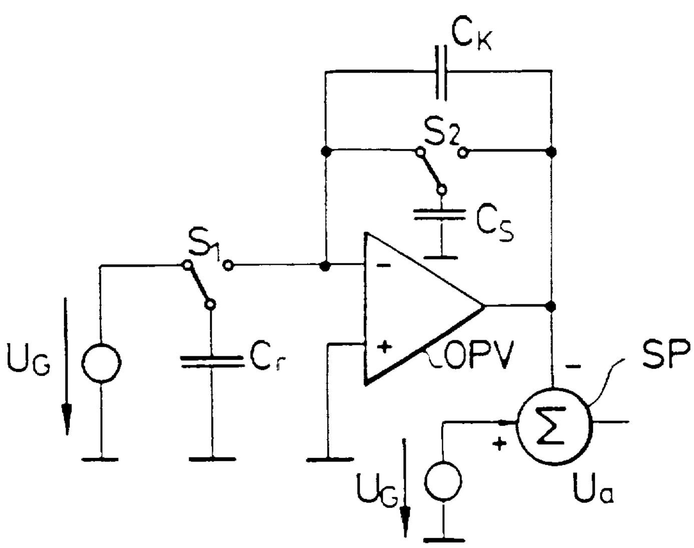


FIG.18

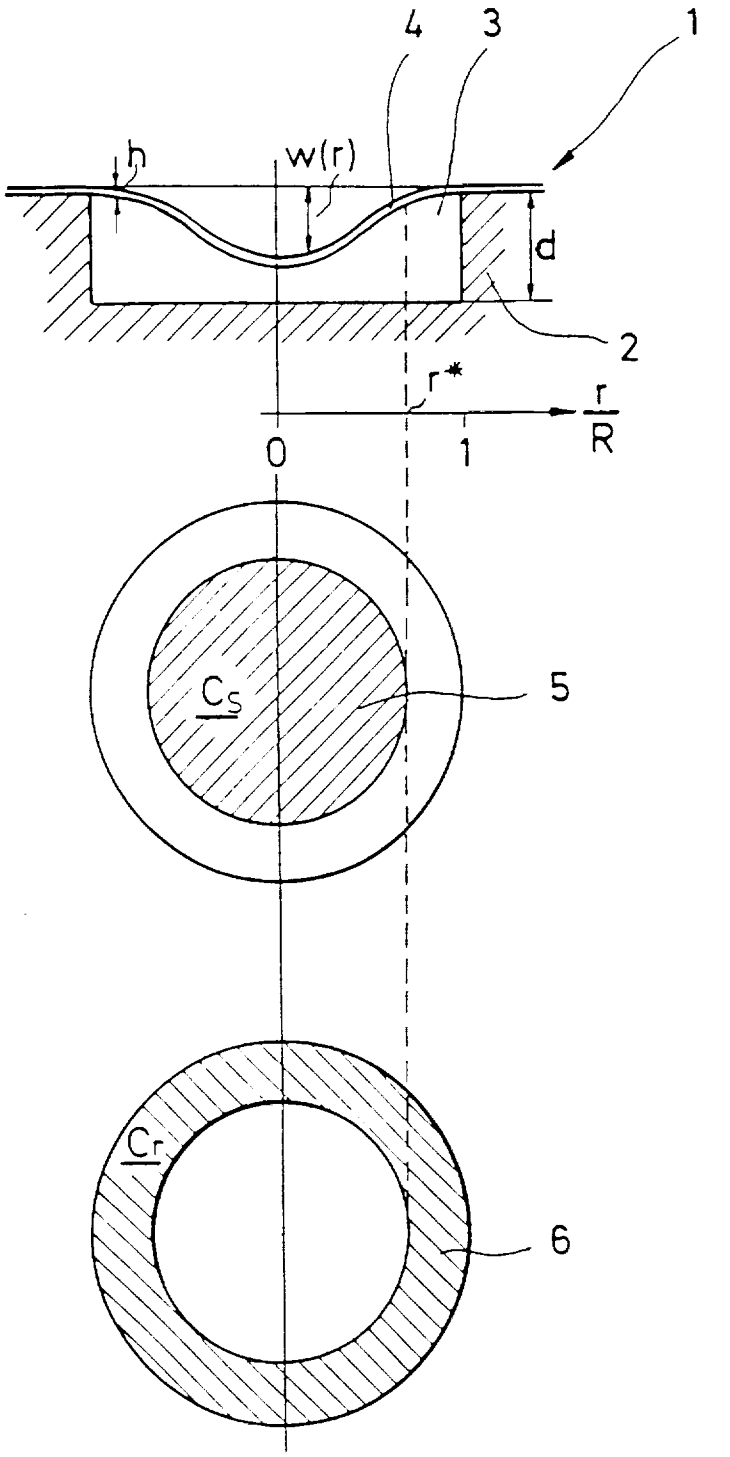


FIG.19